# EUROPÄISCHE PATENTSCHRIFT

(11) **EP 0 993 386 B1**
(45) Veröffentlichungstag und Bekanntmachung des Hinweises auf die Patenterteilung: **04.10.2001**
(21) Anmeldenummer: 98940079.1
(22) Anmeldetag: 23.06.1998
(51) Int. Cl.: B60K 6/02, B60L 11/12, B60L 15/20

(54) **DIESELELEKTRISCHE ANTRIEBSANORDNUNG MIT EINEM ANFAHRDREHMOMENTEN WANDLER**
DIESEL-ELECTRIC DRIVE SYSTEM WITH A STARTING TORQUE CONVERTER
SYSTEME D'ENTRAINEMENT DIESEL-ELECTRIQUE AVEC CONVERTISSEUR DE COUPLE DE DEMARRAGE

(30) Priorität: 10.07.1997 DE 19729382
(43) Veröffentlichungstag der Anmeldung: 19.04.2000
(73) Patentinhaber: Voith Turbo GmbH & Co. KG, 89522 Heidenheim (DE)
(72) Erfinder: MÜLLER, Robert, D-89407 Dillingen (DE)
(74) Vertreter: Dr. Weitzel & Partner
(86) Internationale Anmeldenummer: EP9803821
(87) Internationale Veröffentlichungsnummer: WO9902359

(56) Entgegenhaltungen:
- DE-A- 4 339 703
- US-A- 3 915 251
- US-A- 4 306 156
- PATENT ABSTRACTS OF JAPAN vol. 096, no. 010, 31. Oktober 1996 & JP 08 168104 A (TOYOTA MOTOR CORP), 25. Juni 1996

## Beschreibung

Die Erfindung betrifft eine Antriebsanordnung für ein Fahrzeug, insbesondere ein nicht spurgebundenes Fahrzeug mit mindestens einem Verbrennungsmotor, mindestens einem Generator, mindestens einem elektrischen Antriebsmotor sowie mindestens einem Drehmomentwandler, der zwischen Antriebsmotor und einer Abtriebswelle angeordnet ist sowie ein Verfahren zur Erhöhung des auf die Fahrzeugachsen eines nicht spurgebundenen Fahrzeuges mit dieselelektrischem Antrieb übertragenen Drehmomentes.

Insbesondere bei Straßenfahrzeugen wird heute vermehrt die Verwendung eines Antriebes, bei dem ein Verbrennungsmotor mit einem Generator zur Stromerzeugung verbunden ist, und bei dem der Fahrzeugantrieb durch einen Elektromotor bewerkstelligt wird, der vom vorgenannten Generator gespeist wird, diskutiert. Insbesondere soll hier auf die sogenannten dieselelektrischen Antriebe hingewiesen werden.

Ein derartiger dieselelektrischer Antrieb ist für ein nicht schienengebundenes Fahrzeug beispielsweise aus dem europäischen Patent EP 0 527 145 B1 bekanntgeworden. Das aus dieser Schrift bekannte Fahrzeug hat sich insbesondere dadurch ausgezeichnet, daß Verbrennungsmotor und Generator zu einer sogenannten Verbrennungsmotor-Generatorbaugruppe zusammengefaßt wurden.

Spezielle Antriebskonzepte für Fahrzeuge mit einem Verbrennungsmotor und einem Generator, bei dem als Antriebsmotoren sogenannte Permanentmagnet-Motoren Verwendung finden, sind aus "Drive systems with permanent magnet synchronous motors" in: Automotive Engineering, Februar 1995, S. 75 - 81, bekanntgeworden.

Die Verwendung von dieselelektrischen Antrieben, insbesondere in Nutzfahrzeugen, sind in der Veröffentlichung "Ein elektrischer Einzelradantrieb für City-Busse der Zukunft", B. Wüst, R. Müller, A. Lange in: Der Nahverkehr 6/94, Alba Fachverlag, Düsseldorf, S. 1 - 7, beschrieben.

Bei den aus dem Stand der Technik, insbesondere in Form der letztgenannten Druckschrift bekanntgewordenen Antriebsanordnungen, waren die Antriebs- bzw. Fahrmotoren stets radnah angeordnet. Dies hatte zur Folge, daß derartige Antriebsanordnungen beispielsweise ein erhebliches Gewicht auf wiesen, und die Fahrzeuge waren in ihrem Aufbau von dem herkömmlicher Fahrzeuge mit konventionellem Antrieb stark abweichend, so daß keinerlei Kompatibilität bestand.

Diese Nachteile können durch einen Zentralantrieb überwunden werden, bei dem die Fahrmotoren nicht radnah an der Achse bzw. in derselben montiert sind, sondern über ein Summiergetriebe mit der Achse gekoppelt sind. Bei einer derartigen Anordnung kann der Fahrmotor im Chassis beispielsweise eines Stadtbusses angebracht werden und mittels einer Gelenkwelle eine übliche mechanische Niederflurachse antreiben. Hierdurch können insbesondere die baulichen Unterschiede eines Fahrzeuges mit einem dieselelektrischen Antrieb im Vergleich zu einem Fahrzeug mit Automatgetriebe auf ein Minimum reduziert werden, was erhebliche logistische Vorteile zur Folge hat.

Ein weiterer Nachteil der bisherigen Antriebskonzepte war, daß stets mehr als ein Fahrmotor eingesetzt werden musste, bspw. zwei radnahe angebrachte Fahrmotoren bei dem aus "B. Wüst, R. Müller, A. Lange: Ein elektrischer Einzelradantrieb für City-Busse der Zukunft, Der Nahverkehr, 6/94, S. 1-7, Aba Fachverlag Düsseldorf" bekanntgewordenem Konzept. Insbesondere bei permanent erregten Fahrmotoren, zu denen auch die als Motor eingesetzten Transversalflußmaschinen zählen, war dies nachteilhaft. Bei Einsatz von zwei Fahrmotoren mußten sehr große Leerlaufverluste, die aufgrund der Permanenterregung der Fahrmotoren auftreten, überwunden werden. Eine Minimierung der Leerlaufverluste wäre möglich, wenn anstelle von bspw. zwei Fahrmotoren nur ein zentraler Fahrmotor vorgesehen wird.

Das Problem der angesprochenen Zentralantriebskonzepte ist, daß bei Verwendung nur eines einzigen zentralen Fahr- bzw. Antriebsmotors im Anfahrfall ein nur unzureichendes Drehmoment an den Achsen vom Fahrmotor zur Verfügung gestellt wird.

Erfindungsgemäß wird dieses Problem durch die Merkmale des Anspruchs 1 gelöst.

Durch die Zwischenschaltung eines Drehmomentwandlers zwischen Antriebsmotor und Abtriebswelle kann das vom Antriebsmotor abgegebene Drehmoment gewandelt und überhöht werden. Dies ist insbesondere beim Anfahren des Fahrzeuges notwendig, um die erforderlichen Drehmomente bzw. Anfahrzugkraft zur Verfügung zu stellen. Gleiches gilt bei Steigungen.

Erfindungsgemäß ist der Antriebsmotor nicht ständig mit dem Wandler verbunden, sondern an den Wandler im Bedarfsfall an- bzw. von ihm mit Hilfe einer Kupplung abgekoppelt werden kann. Hierfür eignet sich jedwede Art von Kupplung, wie sie bspw. in "Dubbel, Taschenbuch für den Maschinenbau, 18. Auflage, Seiten G63-G74" gezeigt sind. Besonders geeignet sind Wandlerüberbrückungskupplungen bzw. sogenannte Lock-up-Kupplungen, die im Bedarfsfall den Wandler an den Fahrmotor koppeln und, wenn eine Drehmomentwandlung nicht mehr benötigt wird, den Drehmomentwandler in überbrücken. Derartige Wandlerüberbrückungs- bzw. Lock-up-Kupplungen sind insbesondere für hydrodynamische Drehmomentenwandler bekannt geworden und bspw. in "Gerigk, Bruhn, Danner, Endruschat, Göbert, Gross, Komoll, Kraftfahrzeugtechnik, Westermann-Verlag, 2. Auflage 1994, S. 349-352" gezeigt. Bei einem hydrodynamischen Drehmomentenwandler mit Überbrückungskupplung bzw. Lock-up-Kupplung arbeitet der Wandler bei geöffneter Kupplung , d.h. der Wandler ist in den Kraftfluß vom Antriebsmotor zur Abtriebswelle geschaltet, wohingegen bei geschlossener Kupplung der Wandler überbrückt wird, so daß der Antriebsmotor direkt auf die Abtriebswelle arbeitet.

In einer besonderen Ausführungsform ist vorgesehen, daß die Antriebsanordnung eine Steuerung umfaßt, mit deren Hilfe es möglich ist, daß der Wandler, wenn Anfahrvorgänge erfasst werden an den Antriebsmotor angekoppelt wird und die Steuerung bei Überschreiten einer vorgegebenen Fahrgeschwindigkeit und/oder Anfahrbeschleunigung den Drehmomentwandler überbrückt bzw. vom Antriebsmotor trennt, so daß dann der Antriebsmotor direkt auf die Abtriebswelle arbeitet und das Fahrzeug antreibt. Der Drehmomentwandler wirkt somit nur im unteren Geschwindigkeitsbereich und gleicht durch die erzielbare Überhöhung des Drehmomentes den Nachteil des zu geringen Drehmomentes der elektrischen Antriebsmaschine in diesem Betriebszustand aus. Durch die Überwachung der Anfahrbeschleunigung mittels der erfindungsgemäßen Steuerung wird der Wandler über einen längeren Zeitraum nur in den wenigsten Fällen von Anfahrvorgängen genutzt. Eine Drehmomentwandlung über einen längeren Zeitraum wird insbesondere beim Anfahren in Steigungen, zum Beispiel bei Steigungen größer als 6 % in vollbesetztem Fahrzeug, benötigt. In allen anderen Anfahrfällen wird die Lock-up-Kupplung bereits nach sehr kurzer Zeit geschlossen, so daß Verluste, die in Folge des Wandlerwirkungsgrades auftreten können, ohne merkliche Auswirkungen auf den Kraftstoffverbrauch des mit einem Drehmomentwandler ausgerüsteten Fahrzeuges bleiben. Auf diese Art und Weise wird erreicht, daß der mit einem dieselelektrischen Fahrzeug erzielbare Verbrauchsvorteil erhalten bleibt.

Als Drehmomentwandler findet bevorzugt ein hydrodynamischer Drehmomentwandler Verwendung, wie er beispielsweise in "Hydrodynamische Getriebe, Kupplungen und Bremsen", Krausskopf-Verlag GmbH, Mainz, 1970, auf den Seiten 28 - 37, offenbart ist. Ein hydrodynamischer Drehmomentwandler umfaßt neben einem Pumpenrad, einem Turbinenrad des weiteren noch ein Leitrad, das auch als Reaktionglied bezeichnet wird. Das das Leitrad eines Drehmomentwandlers als Reaktionsglied einen Moment aufnehmen und da die Summe der Momente im Kreislauf gleich Null sein muß, kann das Turbinenmoment je nach Größe und Drehsinn des Leitradmomentes größer gleich oder kleiner als das Pumpenmoment sein, d. h. das Pumpenmoment kann gewandelt werden.

Besonders bevorzugt ist eine Antriebsanordnung, bei der der Antriebsmotor im Fahrzeugchassis angeordnet ist. Vorteilhafterweise ist bei einer derartigen Anordnung eine sogenannte Zentralmotoranordnung gewählt. In einer vorteilhaften Ausgestaltung kann des weiteren vorgesehen sein, Generator und Antriebsmotor zu einer elektrischen Getriebeeinheit zusammenzufassen. Hierdurch wird eine höchstmögliche Kompatibilität mit herkömmlichen Antrieben hergestellt. Der Antriebsstrang entspricht im Aufbau dem eines konventionellen Fahrzeuge und an die Stelle des konventionellen Getriebes kann die elektrische Getriebeeinheit, die sich aus Generator und Antriebsmotor zusammensetzt, treten.

Erfindungsgemäß ist die Verwendung von sogenannten Transversalflußmaschinen als elektrische Antriebsmotoren. Derartige Transversalflußmaschinen sind beispielsweise aus der Veröffentlichung "Ein elektrischer Einzelradantrieb für City-Busse der Zukunft", B. Wüst, R. Müller, A. Lange in: Der Nahverkehr 6/94, Alba-Fachverlag, Düsseldorf, S. 1 - 7, beschrieben.

Neben der Antriebsanordnung stellt die Erfindung auch ein Verfahren gemäß Anspruch 8 zur Erhöhung des auf die Fahrzeugachsen eines nicht spurgebundenen Fahrzeuges mit dieselelektrischem Antrieb übertragenen Drehmomentes zur Verfügung. Gemäß dem erfindungsgemäßen Verfahren wird ein Anfahrvorgang des nicht spurgebundenen Fahrzeuges erfaßt. Wird ein solcher der Steuerung gemeldet, so veranlaßt diese die Anschaltung eines Drehmomentwandlers an den Antriebsmotor. Durch das Einkuppeln des Drehmomtenwandlers in den Antriebsstrang zwischen Antriebsmotor und Abtriebswelle wird das vom Antriebsmotor zur Verfügung gestellte Drehmoment in ein höheres Anfahrmoment gewandelt. Beispielsweise kann durch eine derartige Momentenwandlung das Drehmoment an der Abtriebswelle doppelt so groß sein wie das Eingangsmoment, das vom Antriebsmotor zur Verfügung gestellt wird. Mit Hilfe von Sensoren wird die Fahrgeschwindigkeit bzw. die Fahrzeugbeschleunigung bestimmt. Wird ein vorgegebener Wert für die Fahrgeschwindigkeit bzw. die Anfahrbeschleunigung erreicht, so wird wiederum ein Signal an die Steuerungseinheit übermittelt. Dieses Signal veranlaßt die Steuerungseinheit, den Drehmomentwandler vom Antriebsmotor abzukoppeln bzw. zu überbrücken, so daß der Antriebsmotor direkt auf die Abtriebswelle arbeitet. Durch entsprechende Wahl des vorbestimmten Fahrzeuggeschwindigkeitswertes bzw. Fahrzeugbeschleunigungswertes wird die Zeit, in der die Momentenwandlung beim Anfahrvorgang wirksam ist, eingestellt. Diese Parameter können vom Fachmann ohne erfinderisches Zutun sehr leicht in Bezug auf die für unterschiedliche Gefällestrecken benötigten Anfahrmomente und den Kraftstoffverbrauch hin optimiert werden.

Die Erfindung soll nachfolgend anhand der Figuren beispielhaft beschrieben werden.

Es zeigen:
- Fig. 1:: den schematischen Aufbau eines erfindungsgemäßen Antriebsstranges
- Fig. 2:: den schematischen Drehmoment-Drehzahl-Verlauf der Antriebsmaschine als Fahrmotor mit und ohne Drehmomentwandler

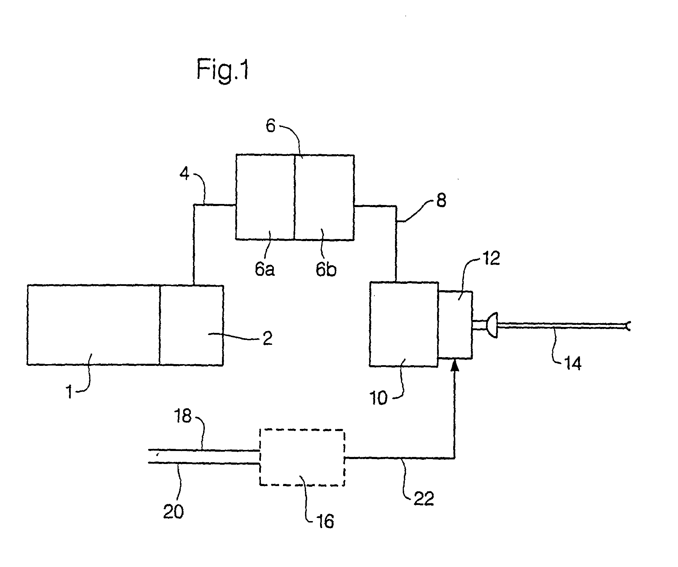

In Fig. 1 ist der erfindungsgemäße Antriebsstrang dargestellt. Der Antriebsstrang umfaßt einen Verbrennungsmotor 1, vorliegend einen Dieselmotor. An den Verbrennungsmotor schließt sich ein Generator 2 an, der mit der Abtriebswelle des Verbrennungsmotors verbunden ist und den für die elektrische Antriebsmaschine notwendigen Strom erzeugt. Bevorzugt als Generator zur Stromerzeugung wird eine als Generator geschaltete Transversalflußmaschine (TFM) verwendet. Der Generator ist über Leitung 4 mit einer Umrichterbaugruppe 6, bestehend aus Generator-Wechselrichter 6a sowie Motor-Wechselrichter 6b, verbunden. Motor-Wechselrichter 6b wiederum ist wiederum über Leitung 8 mit dem Fahrmotor 10, der ebenfalls vorzugsweise eine Transversalflußmaschine ist, verbunden. Über Leitung 8 wird der elektrische Antriebsmotor 10 gespeist. In einer besonders bevorzugten Ausführungsform ist vorgesehen, sowohl für den Generator wie auch für den Fahrmotor ein und dieselbe Transversalflußmaschine, beispielsweise eine Transversalflußmaschine mit einer Leistung, die zwischen 150 kW und 210 kW bei Mₘₐₓ von ca. 1.000 Nm und einem nₘₐₓ von 2.000 min⁻¹ liegt, zu verwenden. Eine besonders kompakte Antriebsanordnung ergibt sich, wenn anstelle einer direkten Anflanschung des Generators 2 an den Fahrmotor in einer besonders bevorzugten Ausführungsvariante der Generator 2, das Umrichterteil 6 sowie Fahrmotor 10 zu einer sogenannten elektrischen Getriebeeinheit zusammengefaßt werden. Die elektrische Getriebeeinheit kann dann anstelle beispielsweise eines Automatgetriebes verwendet werden. Auf diese Art und Weise können die unterschiedlichen Antriebskonzepte, nämlich Antriebsstrang mit Automatgetriebe oder dieselelektrischer Antriebsstrang sehr leicht und ohne große Umbauarbeiten gegeneinander ausgetauscht werden.

Erfindungsgemäß ist vorgesehen, daß zwischen Fahrmotor 10 und Abtriebswelle 14 zu den Antriebsachsen, die vorliegend als Gelenkwelle ausgebildet ist, ein Drehmomentwandler 12 angeordnet ist. Der Drehmomentwandler 12 ist bevorzugt als hydrodynamischer Drehmomentwandler wie beispielsweise in "Hydrodynamische Getriebe, Kupplungen und Bremsen", Krausskopf-Verlag, Mainz, 1970, auf den Seiten 28 - 37 offenbart, ausgebildet. Der Drehmomentwandler befindet sich erfindungsgemäß nicht in ständiger Verbindung mit dem Antriebsmotor, sondern kann über eine Kupplung in den Antriebsfluß vom Fahrmotor zur Gelenkwelle ein- bzw. ausgekuppelt werden bzw. durch eine Lock-up-Kupplung überbrückt wurde. Die hier erwähnte Lock-up-Kupplung kann Teil des Drehmomentwandlers 12 sein und ist in vorliegender Figur nicht separat dargestellt. Betreffend die Lock-up- bzw. Wandler-Überbrückungskupplung wird auf "Gerigk, Bruhn, Danner, Endruschat, Göbert, Gross, Komoll, Kraftfahrzeugtechnik, Westermann-Verlag, 2. Auflage 1994, S. 349-352" verwiesen, deren Offenbarungsgehalt in die Anmeldung vollumfänglich miteinbezogen wird. Dort ist auf S. 351, Abs.3 ein hydrodynamischer Wandler mit Überbrückungskupplung dargestellt, wie er in der Erfindung Verwendung finden kann.

Besonders bevorzugt ist es, wenn die Lock-up-Kupplung zum An- bzw. Abkoppeln des Drehmomentwandlers in Abhängigkeit bestimmter Eingangssignale eingekuppelt bzw. überbrückt wird. Die Steuereinrichtung ist in Fig. 1 strichpunktiert mit Bezugsziffer 16 dargestellt. An der Steuereinheit 16 liegen auf den Eingangsleitungen 18, 20 Eingangssignale an. Beispielsweise liegt auf Leitung 18 ein Eingangssignal an, das einen Anfahrvorgang kennzeichnet. Zur Feststellung, ob ein Anfahrvorgang vorliegt oder nicht, sind entsprechende Mittel zur Detektion desselben im Fahrzeug vorgesehen. Beispielsweise wäre hier denkbar, daß stets wenn das Fahrzeug zum Stillstand kommt, ein Signal gesetzt wird.

Auf Leitung 20 liegen aktuelle Fahrgeschwindigkeits und/oder Beschleunigungssignale des Fahrzeuges an. Diese werden in der Steuereinheit 16 ständig mit den vorgegebenen Werten verglichen. Erreicht die Fahrgeschwindigkeit bzw. Verzögerung einen vorgegebenen Wert, der in einem Speicherbereich der Steuereinheit 16 abgelegt sein kann, so wird ein Ausgangssignal gesetzt und über Ausgangsleitung 22 die Kupplung des Drehmomentwandlers 12 dazu veranlaßt, den Kraftfluß zwischen Fahrmotor und Drehmomentwandler zu unterbrechen, d. h. der Fahrmotor 10 arbeitet in diesem Fall direkt auf die Abtriebswelle 14. Der Drehmomentwandler 12 ist somit aus dem Kraftfluß herausgenommen. Bei einer Lock-up-Kupplung kann dies durch Überbrückung des Wandlers erfolgen. Liegt das Anfahrsignal auf Leitung 18 an, so wird über die Ausgangsleitung 22 die Kupplung des Drehmomentwandlers dazu veranlaßt, denselben an den Fahrmotor 10 anzukoppeln, d. h. der Drehmomentwandler 12 wird in den Kraftfluß vom Fahrmotor 10 zur Abtriebswelle 14 hineingeschaltet bzw. die Überbrückung aufgehoben.

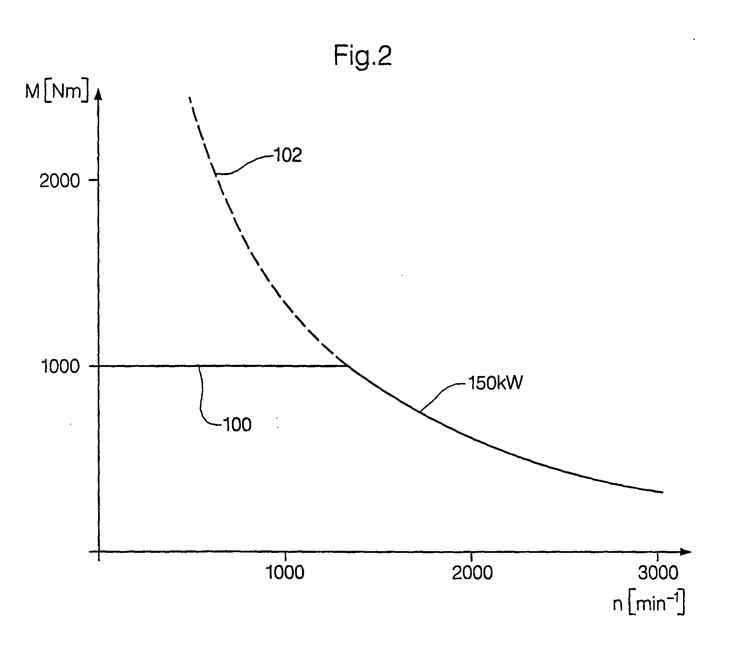

in Figur 2 ist schematisch die Drehmomentenkennlinie eines TFM-Fahrmotores, wie er in der erfindungsgemäßen Antriebsanordnung verwendet wird, mit einer Leistung von 150 kW dargestellt. Es ist das Motordrehmoment in Nm über der Motordrehzahl in 1/min aufgetragen. Wie hieraus zu entnehmen ist, zeigt der Transversalflußmotor bis zu einer Drehzahl von etwa 1.500 min⁻¹ einen konstanten Verlauf, für Drehzahlen größer 1.500 m⁻¹ nimmt das Drehmoment kontinuierlich zu höheren Drehzahlen hin ab. Diese Drehmomentenkennlinie des Transversalflußmotors ist mit der Bezugsziffer 100 bezeichnet und beispielsweise in "Der elektrische Einzelradantrieb für City-Busse der Zukunft", B. Wüst, R. Müller und A. Lange, in: Der Nahverkehr 6/1994, Seiten 1 - 7, beschrieben. Durch die Kopplung des Drehmomentwandlers an den Fahrmotor wird z.B. die strichpunktierte und mit der Bezugsziffer 102 bezeichnete Momentenkurve erhalten. Verglichen mit dem abgegebenen Motormomentes ist das Moment an der Abtriebswelle erheblich angehoben. Dargestellt ist in vorliegendem Fall eine Anhebung etwa um den Faktor 2, selbstverständlich sind für den Fachmann je nach Aufgabenstellung hier beliebige Werte, soweit technisch realisierbar, möglich.

Mit der vorliegenden Erfindung wurde somit erstmals eine Lösung vorgeschlagen, die es ermöglicht, daß ein dieselelektrischer Antrieb mit nur einem einzigen Fahrmotor und damit geringen Gewichtes bei einem Straßenfahrzeug ausgeführt werden konnte, wobei auch im Anfahrbereich ein ausreichend hohes Drehmoment zur Verfügung gestellt wird.

Der besondere Vorteil dieser Lösung ist, daß man erstmals mit einem Motor geringeren Drehmoments bzw. mit einem Motor anstelle von zwei Motoren auskommen kann. Dies wiederum bedeutet vorteilhafterweise geringeres Fahrzeuggewicht, kleinere Abmessungen, Entfall eines Wechselrichters sowie günstigerer Wirkungsgrad des Motors durch Entfall externer Teillastbetriebspunkte z.B. bei Konstantfahrt.

## Patentansprüche

1. Antriebsanordnung für ein Fahrzeug, insbesondere ein nicht spurgebundenes Fahrzeug, mit
mindestens einem Verbrennungsmotor (1),
mindestens einem Generator (2),
mindestens einem elektrischen Antriebsmotor (10)
sowie mindestens einem Drehmomentwandler (12), der zwischen dem Antriebsmotor (10) und einer Abtriebswelle (14) zu den Fahrzeugachsen angeordnet ist, die Antriebsanordnung ist **dadurch gekennzeichnet, daß**
der Antriebsmotor (10) mit dem Wandler zur Überhöhung des vom Antriebsmotors an die Fahrzeugachsen über die Abtriebswelle abgegebenen Drehmomentes gekoppelt ist,
**daß** zwischen Antriebsmotor (10) und Drehmomentwandler (12) Mittel vorgesehen sind, mit denen der Drehmomentwandler an den Antriebsmotor an- und von ihm abgekoppelt oder überbrückt werden kann, und **daß** der Antriebsmotor (10) eine Transversalfluß maschine ist.

2. Antriebsanordnung nach Anspruch 1, **dadurch gekennzeichnet, daß** die Mittel zur An- bzw. Abkopplung oder Überbrückung des Drehmomentenwandlers an den Antriebsmotor eine Lock-up-Kupplung sind.

3. Antriebsanordnung nach Anspruch 1 oder 2, **dadurch gekennzeichnet, daß**
die Antriebsanordnung eine Steuerung (16) umfaßt, die die Lock-up bzw. Wandlerüberbrückungskupplung derart ansteuert, **daß** die Kupplung bei Anfahrvorgängen an den Antriebsmotor angekoppelt wird und bei Überschreitung einer vorgegebenen Fahrgeschwindigkeit und/oder Anfahrbeschleunigung vom Antriebsmotor abgekoppelt bzw. überbrückt wird.

4. Antriebsanordnung gemäß einem der Ansprüche 1 bis 3, **dadurch gekennzeichnet, daß**
der Drehmomentwandler (12) ein hydrodynamischer Drehmomentwandler ist.

5. Antriebsanordnung gemäß einem der Ansprüche 1 bis 4, **dadurch gekennzeichnet, daß** der Antriebsmotor (10) im Fahrzeugchassis angeordnet ist.

6. Antriebsanordnung nach einem der Ansprüche 1 bis 5, **dadurch gekennzeichnet, daß**
ein Antriebsmotor (10) in Zentralmotoranordnung vorgesehen ist.

7. Antriebsmotor nach einem der Ansprüche 1 bis 6, **dadurch gekennzeichnet, daß**
Generator (2) und Antriebsmotor (10) zu einer elektrischen Getriebeeinheit zusammengefaßt sind.

8. Verfahren zur Erhöhung des auf die Fahrzeugachsen eines nicht spurgebundenen Fahrzeuges mit einem dieselelektrischen übetragenen Drehmomentes mit folgenden Schritten:
8.1 es wird ein Anfahrvorgang des Fahrzeuges erfaßt,
8.2 wird ein Anfahrvorgang erfaßt, so wird ein Drehmomentwandler an den Antriebsmotor angekoppelt, so daß ein gegenüber dem vom Antriebsmotor gegebenen Drehmoment überhöhtes Anfahrdrehmoment zur Verfügung gestellt wird,
8.3 wenn ein vorbestimmter Fahrgeschwindigkeitswert des Fahrzeuges und/oder eine Anfahrbeschleunigung erreicht wird, wird der Drehmomentwandler vom Antriebsmotor abgekoppelt, so daß der Antriebsmotor direkt auf die Abtriebswelle und damit die Fahrzeugachsen arbeitet.

## Claims

1. Drive system for a vehicle, in particular a not trackbound vehicle, with
at least one internal combustion engine (1),
at least one generator (2),
at least one electric drive motor (10)
as well as at least one torque converter (12) arranged between the drive motor (10) and a driveshaft (14) to the vehicle axes, and the drive system is **characterised in that**
the drive motor (10) is coupled to the converter for exceeding the torque transferred by the drive motor via the driveshaft to the vehicles axes, and between drive motor (10) and torque converter (12) are provided means by means of which the torque converter can be coupled to and uncoupled from the drive motor or bridged, and the drive motor (10) is a transversal flow machine.

2. Drive system according to Claim 1, **characterised in that** the means for coupling the torque converter to and uncoupling it from or bridging the drive motor is a lock-up coupling.

3. Drive system according to Claims 1 or 2, **characterised in that** the drive system includes a control (16) which controls the lockup and converter bridging coupling in such a manner that the coupling is coupled to the drive motor during starting processes and uncoupled or bridged by the drive motor on exceeding a specified driving speed and/or start acceleration.

4. Drive system according to one of Claims 1 to 3, **characterised in that** the torque converter (12) is a hydro-dynamic torque converter.

5. Drive system according to one of Claims 1 to 4, **characterised in that** the drive motor (10) is arranged in the vehicle chassis.

6. Drive system according to one of Claims 1 to 5, **characterised in that** a drive motor (10) is provided in the central motor arrangement.

7. Drive system according to one of Claims 1 to 6, **characterised in that** generator (2) and drive motor (10) are integrated into one electric gearing unit.

8. Process for exceeding the torque transferred to the vehicle axes of a not trackbound vehicle with a diesel-electrical transferred torque by way of the following stages:
8.1: a start process of the vehicle is detected;
8.2: if a start process is detected, then a rotary converter is coupled to the drive motor so that a start torque in excess of the torque offered by the drive motor is made available;
8.3: when a predetermined driving speed value of the vehicle and/or a start acceleration is arrived at, the rotary converter is uncoupled from the drive motor so that the drive motor operates directly on the driveshaft and thus on the vehicle axes.

## Revendications

1. Système d'entraînement pour un véhicule, en particulier un véhicule non guidé, avec au moins un moteur à combustion interne (1), au moins un générateur (2), au moins un moteur électrique d'entraînement (10), ainsi que au moins un convertisseur de couple (12) qui est disposé par rapport aux essieux du véhicule entre le moteur d'entraînement (10) et un arbre mené (14), le système d'entraînement étant **caractérisé en ce que** le moteur d'entraînement (10) est accouplé avec le convertisseur afin d'augmenter le couple transmis par le moteur d'entraînement aux essieux du véhicule par l'intermédiaire de l'arbre mené.

2. Système d'entraînement suivant la revendication 1, **caractérisé en ce que** les moyens d'accouplement / désaccouplement ou de pontage du convertisseur de couple au moteur d'entraînement sont un coupleur de blocage.

3. Système d'entraînement suivant la revendication 1 ou 2, **caractérisé en ce que** le système d'entraînement comprend une commande (16) qui commande le coupleur de blocage ou de pontage du convertisseur de telle sorte que le coupleur est accouplé au moteur d'entraînement lors de processus de démarrage et qu'il est désaccouplé ou ponté du moteur d'entraînement lors d'un dépassement de valeur prédéterminée de vitesse de roulement et/ou d'accélération au démarrage.

4. Système d'entraînement suivant l'une des revendications 1 à 3,
**caractérisé en ce que** le convertis-seur de couple (12) est un convertisseur de couple hydrodynamique.

5. Système d'entraînement suivant l'une des revendica-tions 1 à 4, **caractérisé en ce que** le moteur d'entraînement (10) est placé dans le châssis du véhicule.

6. Système d'entraînement suivant l'une des revendica-tions 1 à 5,
**caractérisé en ce qu'**il est prévu un moteur d'entraînement (10) dans le système de moteur central.

7. Système d'entraînement suivant l'une des revendications 1 à 6,
**caractérisé en ce que** le générateur (2) et le moteur d'entraînement (10) sont réunis en un groupe de commande électrique.

8. Procédé pour l'augmentation du couple transmis aux essieux d'un véhicule non guidé au moyen d'un système d'entraînement diesel électrique, qui comprend les étapes suivantes :
8.1. un processus de démarrage du véhicule est engagé,
8.2. une fois un processus de démarrage engagé, un convertisseur de couple est accouplé au moteur d'entraînement de manière à rendre disponible un couple de démarrage augmenté par rapport au couple fourni par le moteur d'entraînement,
8.3. lorsqu'une valeur prédéterminée de vitesse de roulement du véhicule et/ou d'accélération au démarrage est atteinte, le convertisseur de couple est désaccouplé du moteur d'entraînement afin que le moteur d'entraînement agisse directement sur l'arbre mené et donc sur les essieux du véhicule.
